# EUROPÄISCHE PATENTSCHRIFT

(11) **EP 2 818 296 B1**
(45) Veröffentlichungstag und Bekanntmachung des Hinweises auf die Patenterteilung: **06.01.2016**
(21) Anmeldenummer: 13173849.4
(22) Anmeldetag: 26.06.2013
(51) Int. Cl.: B29C 41/38, B29C 41/04, B29C 41/20, B29L 31/00

(54) **Verfahren zur Herstellung eines Produkts im Rotationsverfahren**
Method for producing a product by a rotation method
Procédé de fabrication d'un produit dans un procédé de rotation

(43) Veröffentlichungstag der Anmeldung: 31.12.2014
(73) Patentinhaber: MAGNA STEYR Fuel Systems GmbH Werk Schwäbisch Gmünd, 73529 Schwäbisch-Gmünd (DE)
(72) Erfinder: Fetzer, Horst, 73054 Eislingen (DE)
(74) Vertreter: Rausch, Gabriele

(56) Entgegenhaltungen:
- DE-A1- 2 203 297
- FR-A1- 2 798 913
- US-A- 3 528 133
- US-A1- 2004 164 457
- US-B1- 6 383 437

## Beschreibung

Die Erfindung geht aus von einem Verfahren zur Herstellung eines Produktes im Rotationsverfahren wobei eine mindestens zweiteilige Form verwendet wird.

Weiterhin geht die Erfindung aus von einem Produkt, das mit dem erfindungsgemäßen Verfahren hergestellt wird.

### Stand der Technik

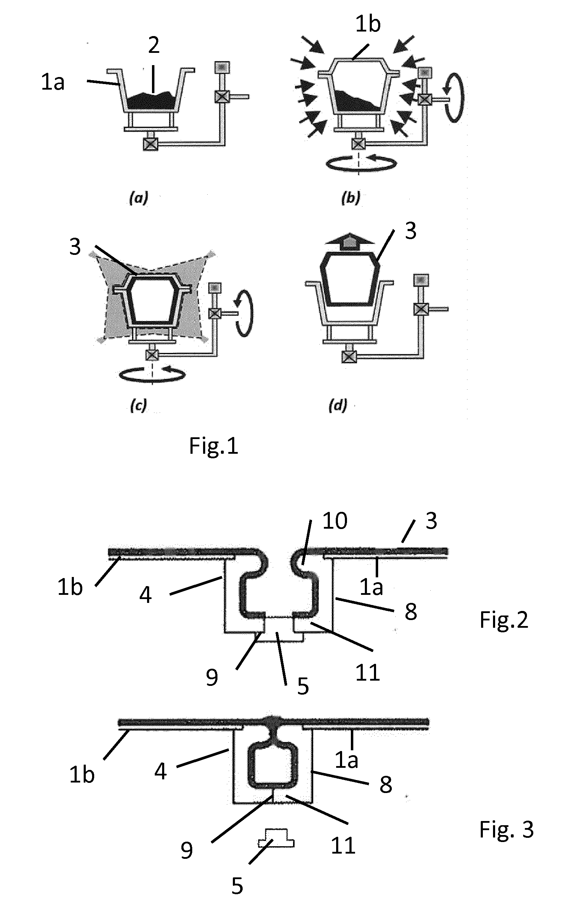

Das Rotationsformen ist ein Kunststoff-Bearbeitungsverfahren für Hohlkörper wie es schematisch in Figur 1 dargestellt ist.

In der Fig. 1 a ist eine Rotationsform 1 dargestellt, die mit Kunststoffmaterial 2 - oft in Pulverform- befüllt ist. Es lassen sich verschiedene Formmaterialien verwenden. Für einfache, kantige Behältnisse werden Formen kostengünstig aus Stahlblech oder Aluminiumblech hergestellt. Für komplizierte, gerundete und geschweifte Formteile werden jedoch die Rotationsformen einfacher in Aluminium gegossen oder aus einem gegossenen Aluminiumblock gefräst.

Die Form ist in diesem Beispiel zweiteilig ausgebildet und wird nach dem Befüllen mit Kunststoff durch ein weiteres Formteil geschlossen. Durch Rotation und durch Erwärmung siehe Figur 1b wird in der dünnwandigen Hohlkörperform das pulverförmiges Thermoplast-Material Schicht um Schicht an den Innenflächen abgelagert. Dadurch können relativ gleichmäßige Wandstärken von 2 bis 15 mm erreicht werden. Die Temperaturen sind abhängig von der Teilegeometrie, dem verwendeten Kunststoff, der geforderten Wandstärke und dem Formenmaterial.

Das Kühlen siehe Fig. 1c erfolgt meistens mittels Luftgebläsen und unter bestimmten Voraussetzungen auch mit gesprühtem Wassernebel.

Nach dem Abkühlen wird die Form geöffnet und das Kunststoffteil entnommen. Zum besseren Entformen, aber auch zum Erhalt einer konstanten Teilequalität können die Rotationsformen in verschiedenen Verfahren beschichtet oder behandelt werden.

Dabei weist das Rotationsformen gegenüber dem Blasformen oder Spritzgussverfahren die Vorteile auf, dass einfache Werkzeuge verwendet werden können. Gerade für Kleinserien und Prototypen ist das Verfahren gut geeignet, da sich damit nahtlose Hohlkörper herstellen lassen.

Wie jedes Produktionsverfahren kennt auch das Rotationsformen Verfahrensgrenzen. Das teilweise unberechenbare Schwindungsverhalten kann mit Erfahrung für konstruktive Details in engen Toleranzen gehalten werden. Eng tolerierte Maße von Öffnungen, Gewinden und Ausfräsungen müssen jedoch auf konventionelle Art hergestellt werden.

Hauptsächlich finden die Thermoplaste Polyethylen (PE, auch elektrisch leitend) und Polypropylen (PP) Anwendung. Mit speziellen Einrichtungen an den Anlagen lassen sich auch fast alle weiteren Thermoplast-Produkte wie Polyamid (PA), Polycarbonat (PC) und Polystyrol (PS) für das Rotationssintern verwenden. In Ausnahmefällen eignen sich auch wärmehärtende 2-Komponenten-Duroplaste.

Aus der DE 10021307 ist die Herstellung eines Kunststofftanks im Rotationsverfahren mit einem angeschmolzenen Verbindungsstutzen bekannt. Allerdings muss dieser Stutzen in der Form verankert werden, um während der Herstellung eine Anbindung zu ermöglichen. Der Kunststofftank kann nach diesem Stand der Technik auch nicht mit Bauteilen im Innern bestückt werden.

US3528133 A1 zeigt ein Verfahren zur. Herstellung von Kunststoffprodukten mit einem Rotationsverfahren. Die beiden Teile der Form weisen keine Hinterschneidung auf, die sich entlang der Formtrennlinie erstreckt und in die ein isolierendes Material eingelegt wird. Das isolierende Material 62 ist in einem Teil der Form fest installierte und es erstreckt sich nicht entlang der Hinterschneidung, die auch die Formtrennlinie bildet.

Es ist daher Aufgabe der Erfindung ein Kunststoffprodukt insbesondere einen Kunststofftank im Rotationsverfahren herzustellen, wobei Einlegeteil auf einfache Art und Weise integriert werden.

Die Aufgabe wird gelöst mit den Merkmalen des Anspruchs 1.

Die Aufgabe wird insbesondere gelöst mit einem Verfahren zur Herstellung eines Produktes im Rotationsverfahren, wobei eine mindestens zweiteilige Form verwendet wird, und wobei die Form an mindestens einem der Formtrennungslinien eine externe Hinterschneidung aufweist, die sich entlang der Formtrennungslinie erstreckt und in die ein isolierendes Material eingelegt wird.

Durch das Einlegen von isolierendem Material wird die Ausbildung einer einheitlichen Kunststoffhaut verhindert und eine Solltrennung erzeugt. Vorteilhafterweise bildet die Hinterschneidung im Querschnitt einen u-förmigen Raum.

Es ist von Vorteil, dass ein Auskragung der Form eine Einschnürung der Hinterschneidung auf einen Abstand (a) bewirkt, der der Breite (b) des isolierenden Materials entspricht, so dass auf einfache Art und Weise beim Zusammenfügen der beiden Formteile ein Verschmelzen der Kunststoffhaut erreicht wird.

Es ist weiterhin von Vorteil, dass nach dem Aufschmelzen des eingebrachten Kunststoffmaterials, die Form im heißen Zustand entlang der Hinterschneidung aufgeklappt wird und somit für eine weitere Bearbeitung im geöffneten Zustand zur Verfügung steht.

Auf einfache Art und Weise werden im aufgeklappten Zustand KunststoffBauteile in die schmelzflüssige Kunststoffhaut eingelegt.

Es ist von Vorteil, dass durch das erfindungsgemäße Verfahren eine einfache Integration von Bauteilen im Inneren der Kunststoffhaut erfolgen kann, und die Kunststoffhaut doch gleichzeitig einteilig hergestellt werden kann.

Verfahren wird in vorteilhafte Art und Weise für die Herstellung von Kunststofftanks für ein Fahrzeug eingesetzt.

### Beschreibung der Erfindung

Die Erfindung wird nachfolgend beispielhaft unter Bezugnahme auf die beigefügte Zeichnung beschrieben.
- Fig. 1: zeigt eine schematische Darstellung des Verfahrens im Stande der Technik
- Fig. 2: zeigt eine schematische Darstellung der beispielhaften Ausführungsform der Hinterschneidung.
- Fig 3: zeigt die Hinterschneidung nach Entnahme des Isolators.
- Fig. 4: zeigt einen Ablauf des erfindungsgemäßen Verfahrens.

Figur 1 zeigt eine schematische Darstellung des Rotationsverfahrens, wie es aus dem Stand der Technik bekannt ist. Zur Durchführung des erfindungsgemäßen Verfahrens wird in der Form 1 eine spezielle Hinterschneidung 4 wie sie in Figur 2 dargestellt ist, verwendet.

Figur 2 zeigt einen Ausschnitt, der die Verbindungsstelle zwischen den Formteilen, dem Formunterteil 1a und dem Formoberteil 1b, darstellt. Beide Formteile 1a, 1b besitzen einen winkligen Formabschnitt 8, der in etwa senkrecht zur Form nach außen verläuft. Der Formabschnitt 8 endet mit einem Schenkel 11 in einem stumpfen Ende 9. An der Anschlussseite des Formabschnitts 8 zur Form 1a bzw. 1b weist der Formabschnitt 8 eine Auskragung 10 auf.

Zwischen den beiden stumpfen Enden 9 der beiden Formteile 1a und 1b wird ein isolierendes Material z.B. Silicon, temperaturbeständiger Holzwerkstoff eingelegt und befestigt. Das isolierende Material 5 kann dabei in geeigneter Weise zwischen die beiden stumpfen Enden der Formteile eingesteckt und formschlüssig gehalten sein.

Das isolierende Material 5 weist eine geringe Wärmeleitfähigkeit auf, so dass auf ihm im Inneren der Form kein Kunststoffmaterial ausschmelzen kann. Die Breite b des isolierenden Materials 5 entspricht in etwa dem Abstand a, der durch die Auskragungen 10 der Formteile 8 gebildet wird. Figur 2 zeigt den Zustand, in dem sich die Form mit ihren beiden Formteilen 1a und 1b befinden, nachdem der Kunststoff im Inneren ausgeschmolzen ist und eine Kunststoffhaut 3 auf allen wärmeleitenden Formabschnitten bildet.

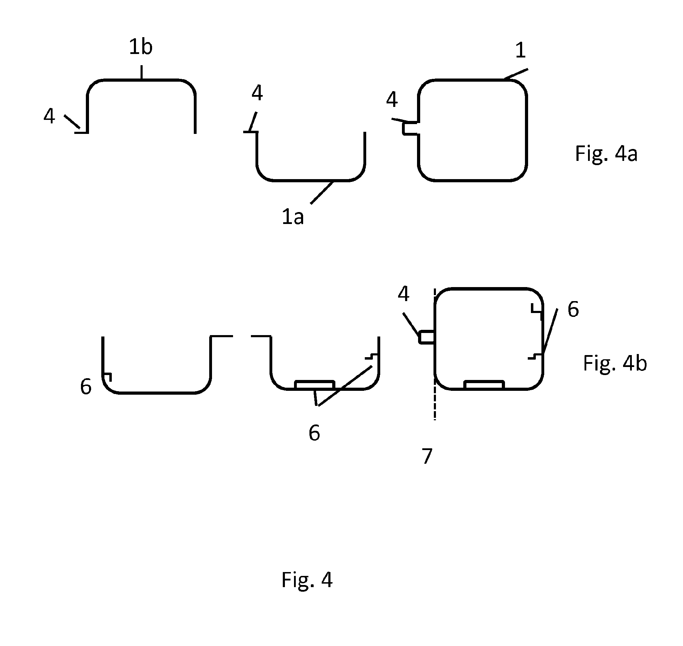

In Figur 4 sind die erfindungsgemäßen Verfahrensschritte näher dargestellt. Im oberen Bereich 4a ist der Rüstprozess für das Rotationsverfahren gezeigt. Ein Formoberteil 1b sowie ein Formunterteil 1a werden dargestellt, wobei beide Formteile jeweils einen Teil der Hinterschneidung 4 an ihrer Formtrennstelle besitzen.

Die Hinterschneidung ist dabei beispielhaft nur an einer Stelle angedeutet.

Die beiden Formteile 1a, 1b werden zu einem Form 1 zusammengesetzt, wobei die Hinterschneidung 4 ebenfalls geschlossen wird, und das isolierende Material 5 umfasst. Danach laufen die Prozessschritte wie in Figur 1b beschrieben ab. Das sich in der Form 1 befindende Kunststoffmaterial 2 wird auf geschmolzen und durch die Bewegung der Form 1 über die Innenseite der Form als Kunststoffhaut 3 verteilt. Jetzt wird die Form nach Figur 4b im warmen Zustand geöffnet. Dabei wird die Hinterschneidung aufgeklappt und das isolierende Material 5 entlang der Trennlinie entfernt. Da die Kunststoffhaut nicht abgekühlt wurde, ist es möglich Einlageteile 6 in die beiden offenen Halbschalen einzulegen. Die Einlageteile bestehen dabei aus Kunststoffmaterial und können Anlagen, Befestigungen, Haken usw. sein. Anschließend wird die Form wieder verschlossen, und durch die spezielle Ausbildung der Hinterschneidung kommen die beiden Auskragungen 10 in Kontakt und können durch die in der Form enthaltene Restwärme miteinander verschmelzen. Dieser Zustand wird in Figur 3 dargestellt. Die beiden Auskragungen 10 berühren einander, wenn die beiden stumpfen Enden 9 der Formteile 8 geschlossen aufeinander liegen. Dadurch entsteht im Innern der Form ein einteiliger Hohlkörper, in dem Einlageteile 6 eingeschmolzen sind.

Bei den Einlageteilen 6 kann es sich um Befestigungen oder um Anlagen für zu integrierende Bauteile handeln.

Das erfindungsgemäße Verfahren ist besonders für die Herstellung von Fahrzeugtanks geeignet. Dabei wird ein einteiliger Hohlkörper erzeugt, der bereits Bauteile beinhaltet, um Pumpen und Schläuche oder weitere einen Bauteile zu lagern oder zu befestigen.

Öffnungen des Kunststofftanks können wie im Stand der Technik beschrieben durch spezielle Öffnungsvorrichtungen hergestellt werden oder werden nach Fertigstellung der Kunststoffhaut in den geschlossenen Körper geschnitten.

Das beschreiben Ausführungsbeispiel ist eine der für den Fachmann denkbaren Lösung für die Ausbildung einer Hinterschneidung. Auch kann die Form eine mehrteilige Form sein, die so gestaltet ist, dass ein Teil der Form entlang einer Hinterschneidung geöffnet werden kann.

### Bezugszeichenliste

- 1: Form
- 1a: Formunterteil
- 1b: Formoberteil
- 2: Kunststoffmaterial
- 3: Kunststoffhaut
- 4: Hinterschneidung
- 5: Isolator
- 6: Einlageteil
- 7: Schnittlinie
- 8: Formteil
- 9: Stumpfes Ende
- 10: Auskragung

## Patentansprüche

1. Verfahren zur Herstellung eines Produktes im Rotationsverfahren wobei eine mindestens zweiteilige Form (1a, 1b) verwendet wird, **dadurch gekennzeichnet, dass** die Form (1a, 1b) an mindestens einer der Formtrennungslinien eine externe Hinterschneidung (4) aufweist, die sich entlang der Formtrennungslinie erstreckt und in die ein isolierendes Material (5) eingelegt wird und dass nach dem Aufschmelzen des eingebrachten Kunststoffmaterials (2), die Form (1) im heißen Zustand entlang der Hinterschneidung (4) aufgeklappt wird und, dass das isolierende Material (5) entfernt wird.

2. Verfahren nach Anspruch 1 **dadurch gekennzeichnet, dass** die Hinterschneidung (4) so ausgebildet wird, dass sie im Querschnitt einen u-förmigen Raum bildet.

3. Verfahren nach Anspruch 1 **dadurch gekennzeichnet, dass** die Form der Hinterschneidung (4) so ausgebildet wird, dass sie eine Auskragung (10) aufweist.

4. Verfahren nach Anspruch 3 **dadurch gekennzeichnet, dass** die Auskragung (10) so ausgebildet wird, dass eine Einschnürung der Hinterschneidung (4) auf einen Abstand (a) hergestellt wird, der der Breite (b) des isolierenden Materials (5) entspricht.

5. Verfahren nach Anspruch 1 **dadurch gekennzeichnet, dass** im aufgeklappten Zustand Einlegeteile (6) in die schmelzflüssige Kunststoffhaut (3) eingelegt werden.

6. Verfahren nach Anspruch 1 **dadurch gekennzeichnet, dass** die Form (1) anschließend verschlossen wird.

7. Verfahren nach Anspruch 1 **dadurch gekennzeichnet, dass** die Form (1) abgekühlt und das Kunststoffprodukt entformt wird.

8. Verfahren nach einem der vorhergehenden Ansprüche, **dadurch gekennzeichnet, dass** das Verfahren für die Herstellung eines Tanks für ein Fahrzeug vorgesehen wird..

## Claims

1. Method for producing a product by a rotation method using an at least two-part mould (1a, 1b), **characterized in that** the mould (1a, 1b) has at at least one of the mould parting lines an external undercut (4), which extends along the mould parting line and into which an insulating material (5) is placed and **in that**, after the plastics material (2) introduced has melted, the mould (1) in the hot state is opened up along the undercut (4) and **in that** the insulating material (5) is removed.

2. Method according to Claim 1, **characterized in that** the undercut (4) is formed in such a way that in cross section it forms a u-shaped space.

3. Method according to Claim 1, **characterized in that** the shape of the undercut (4) is formed in such a way that it has a projection (10).

4. Method according to Claim 3, **characterized in that** the projection (10) is formed in such a way that a constriction of the undercut (4) to a spacing (a) that corresponds to the width (b) of the insulating material (5) is produced.

5. Method according to Claim 1, **characterized in that**, in the opened state, inserts (6) are placed into the molten skin of plastic (3).

6. Method according to Claim 1, **characterized in that** the mould (1) is subsequently closed.

7. Method according to Claim 1, **characterized in that** the mould (1) is cooled down and the plastic product is demoulded.

8. Method according to one of the preceding claims, **characterized in that** the method is intended for the production of a tank for a vehicle.

## Revendications

1. Procédé de fabrication d'un produit dans un procédé de rotation, un moule au moins en deux parties (1a, 1b) étant utilisé, **caractérisé en ce que** le moule (1a, 1b) présente, au moins au niveau de l'une des lignes de séparation du moule, une contre-dépouille externe (4) qui s'étend le long de la ligne de séparation du moule et dans laquelle est introduit un matériau isolant (5) et **en ce qu'**après la fusion du matériau en plastique introduit (2), le moule (1) est ouvert par pivotement à l'état chaud le long de la contre-dépouille (4) et **en ce que** le matériau isolant (5) est enlevé.

2. Procédé selon la revendication 1, **caractérisé en ce que** la contre-dépouille (4) est réalisée de telle sorte qu'elle forme en section transversale un espace en forme de u.

3. Procédé selon la revendication 1, **caractérisé en ce que** le moule de la contre-dépouille (4) est réalisé de telle sorte qu'il présente une partie en saillie (10).

4. Procédé selon la revendication 3, **caractérisé en ce que** la partie en saillie (10) est réalisée de telle sorte qu'un rétrécissement de la contre-dépouille (4) soit produit à une distance (a) qui correspond à la largeur (b) du matériau isolant (5).

5. Procédé selon la revendication 1, **caractérisé en ce qu'**à l'état ouvert par pivotement, des parties d'insertion (6) sont introduites dans la peau en plastique (3) à l'état en fusion.

6. Procédé selon la revendication 1, **caractérisé en ce que** le moule (1) est ensuite fermé.

7. Procédé selon la revendication 1, **caractérisé en ce que** le moule (1) est refroidi et le produit en plastique est démoulé.

8. Procédé selon l'une quelconque des revendications précédentes, **caractérisé en ce que** le procédé est prévu pour la fabrication d'un réservoir de véhicule.
